# EUROPÄISCHE PATENTSCHRIFT

(11) **EP 2 642 172 B1**
(45) Veröffentlichungstag und Bekanntmachung des Hinweises auf die Patenterteilung: **18.05.2016**
(21) Anmeldenummer: 13159849.2
(22) Anmeldetag: 19.03.2013
(51) Int. Cl.: B60T 17/04, F02M 55/00, F16L 19/02, F16L 19/028

(54) **Schraubverbindungsvorrichtung zur Verbindung gebördelter Rohrenden zweier Rohre**
Screw connection device for connecting the crimped ends of two tubes
Dispositif de liaison à vis destiné à relier des extrémités tubulaires serties de deux tubes

(30) Priorität: 23.03.2012 DE 202012101058 U
(43) Veröffentlichungstag der Anmeldung: 25.09.2013
(73) Patentinhaber: TI Automotive (Heidelberg) GmbH, 69123 Heidelberg (DE)
(72) Erfinder: Weick, Georg, 68723 Plankstadt (DE); Abbott, Sebastian, 69123 Heidelberg (DE); Stahn, Andreas, 69231 Rauenberg (DE)
(74) Vertreter: Rohmann, Michael

(56) Entgegenhaltungen:
- EP-A1- 1 528 309
- DE-A1- 10 107 246
- DE-U1- 9 409 236
- JP-A- H07 248 079
- US-A1- 2002 101 079

## Beschreibung

Die Erfindung betrifft eine Schraubverbindungsvorrichtung zur Verbindung gebördelter Rohrenden zweier Rohre.

Schraubverbindungsvorrichtungen der vorstehend genannten Art sind aus der Praxis grundsätzlich bekannt. Dabei hat es sich bewährt, ein Rohrende mit einem E-Bördel und das andere Rohrende mit einem F-Bördel zu versehen. Zur Herstellung einer fluiddichten Verbindung zwischen den beiden Rohrenden wird der E-Bördel gegen den F-Bördel gepresst. Nachteilig bei den aus der Praxis bekannten Schraubverbindungsvorrichtungen ist jedoch, dass durch ein zu starkes Aufeinanderpressen der beiden Bördel die Bördel beschädigt werden und infolgedessen die Fluiddichtigkeit der Verbindung nicht mehr gewährleistet ist. Zusätzlich ist es bekannt, zwischen den Bördeln ein Distanzelement bzw. einen Zwischenring anzuordnen. Dieser muss jedoch, um eine zuverlässige Installation der Schraubverbindungsvorrichtung zu ermöglichen, in einem Gehäuse gesichert werden, um ein Herausfallen des Distanzelementes vor der Montage zu verhindern. Dies erfordert zusätzliche Herstellungsschritte, die sich nachteilig auf die Produktionskosten einer Schraubverbindungsvorrichtung auswirken.

Aus JP 07 248079 A ist eine Schraubverbindungsvorrichtung der vorstehend genannten Art bekannt. Diese Schraubverbindungsvorrichtung bezieht sich auf zwei gebördelte Rohre, welche über eine Schraube, eine Schraubenmutter und ein Distanzelement miteinander verbunden werden. Zu diesem Zwecke wird in die Schraubenmutter zunächst das erste gebördelte Rohr eingeführt, danach das Distanzelement eingeschraubt und zuletzt wird die Schraube mit dem zweiten gebördelten Rohr in die Schraubenmutter bis zur pressdichten Verbindung eingeschraubt. Das Distanzelement füllt in radialer Richtung einen Aufnahmeraum der Schraubenmutter nicht vollständig aus. Dies hat den Vorteil, dass die Toleranzen bezüglich Distanzelement und Aufnahmeraum verhältnismäßig großzügig sein können, was sich günstig auf die Herstellungskosten auswirkt. Allerdings besteht so auch die Möglichkeit, dass das Distanzelement ein wenig hinsichtlich seiner Rotationsachse verdreht werden kann und auch, wie gefunden wurde, leicht verdreht zwischen den gebördelten Rohrenden fixiert werden kann. Dies kann schließlich zu Undichtigkeiten führen, wodurch die Montierbarkeit hinsichtlich Zuverlässigkeit beeinträchtigt wird.

Der Erfindung liegt daher das technische Problem zugrunde, eine Schraubverbindungsvorrichtung der eingangs genannten Art anzugeben, die sich durch eine zuverlässige Montierbarkeit und einfache Herstellbarkeit auszeichnet.

Zur Lösung des technischen Problems lehrt die Erfindung eine Schraubverbindungsvorrichtung zur Verbindung gebördelter Rohrenden zweier Rohre, umfassend zwei Rohre mit gebördelten Rohrenden, eine Schraube, eine Schraubenmutter und ein Distanzelement, wobei die Schraubenmutter eine vorderseitige Öffnung aufweist, von welcher vorderseitigen Öffnung aus sich ein vorzugsweise zylindrischer Aufnahmeraum in Richtung einer rückseitigen Öffnung der Schraubenmutter erstreckt, wobei eine aufnahmeraumseitige Oberfläche der Schraubenmutter einen Gewindeabschnitt aufweist, welcher Gewindeabschnitt als Innengewinde ausgebildet ist und sich ausgehend von der vorderseitigen Öffnung in Richtung der rückseitigen Öffnung abschnittsweise in dem Aufnahmeraum erstreckt, wobei die rückseitige Öffnung in einer rückseitigen Stirnwand angeordnet ist, welche rückseitige Stirnwand der Schraubenmutter eine aufnahmeraumseitige Anschlussfläche aufweist, wobei in der Schraubenmutter in einem vormontierten Zustand das Distanzelement und ein erstes Rohrende mit einem ersten Bördel aufnehmbar sind, wobei sich ein Gewindeprofil des Innengewindes mit der Maßgabe in den Aufnahmeraum erstreckt, dass in dem vormontierten Zustand das Distanzelement zwischen dem ersten Bördel und dem Innengewinde unverlierbar mit einem vorgegebenen Spiel in dem Aufnahmeraum gehalten wird, wobei in der Schraube ein zweites Rohrende mit einem zweiten Bördel haltbar ist, wobei durch Einschrauben der Schraube in die Schraubenmutter ein montierter Zustand herstellbar ist, wobei der zweite Bördel im montierten Zustand derart mit einer Anpresskraft durch die Schraube beaufschlagbar ist, dass der zweite Bördel gegen eine Dichtfläche des Distanzelementes und das Distanzelement mit einer weiteren Dichtfläche gegen den ersten Bördel derart gepresst wird, dass eine rückseitige Anlagefläche des ersten Bördels im montierten Zustand gegen die Anschlussfläche der Schraubenmutter gepresst wird, wobei das Distanzelement ein Außengewinde aufweist, das komplementär zu dem Innengewinde des Gewindeabschnitts der Schraubenmutter ausgebildet ist und wobei das Distanzelement mit der Maßgabe in dem Aufnahmeraum gehalten ist, dass das Distanzelement lediglich in axialer Richtung bzw. Längsrichtung des Aufnahmeraums beweglich ist.

Vormontierter Zustand meint im Rahmen der Erfindung, dass die Schraube nicht oder lediglich teilweise in die Schraubenmutter eingeschraubt ist. Im vormontierten Zustand wird durch die Schraube besonders bevorzugt keine Anpresskraft auf den zweiten Bördel ausgeübt. Montierter Zustand (Verbindungszustand) meint im Rahmen der Erfindung, dass durch die Anpresskraft der zweite Bördel fluiddicht an das Distanzelement und das Distanzelement fluiddicht an den ersten Bördel gedrückt bzw. gepresst ist. Im montierten Zustand kann ein fluides Medium, beispielsweise Bremsflüssigkeit, von dem ersten Rohr zu dem zweiten Rohr bzw. von dem zweiten Rohr zu dem ersten Rohr strömen.

Die Schraubverbindungsvorrichtung kann beispielsweise in Bremssystemen bzw. Bremsleitungen und/oder Kraftstoffleitungen eingesetzt werden.

Vorderseitige Öffnung beschreibt im Rahmen der Erfindung eine Einführungsöffnung in der Schraubenmutter, durch die in vorteilhafter Weise die Schraube mit dem zweiten Rohr in den Aufnahmeraum einführbar bzw. einschraubbar ist. Der Aufnahmeraum ist vorzugsweise kreiszylindrisch ausgebildet. Durch die rückseitige Öffnung ragt vorteilhafterweise das erste Rohr in den Aufnahmeraum, wobei der Bördel des ersten Rohres in dem Aufnahmeraum angeordnet ist. Das erste Rohrende ragt also durch die rückseitige Öffnung in den Aufnahmeraum der Schraubenmutter. Das erste Rohr und/oder das zweite Rohr sind jeweils Bremsleitungen oder Kraftstoffleitungen. Die Schraube weist zweckmäßigerweise einen Aufnahmekanal zur Aufnahme des zweiten Rohrendes auf. Eine das zweite Rohrende umlaufende Stirnseite der Schraube ist im Rahmen der Erfindung als Pressfläche ausgebildet, mit welcher Pressfläche die Schraube bei der Herstellung des montierten Zustandes und im montierten Zustand den Anpressdruck auf den zweiten Bördel ausübt. Im montierten Zustand liegt die Schraube vorzugsweise mit der Pressfläche kraftschlüssig an dem zweiten Bördel an. Vorteilhafterweise ist ein Außengewinde der Schraube komplementär zu dem Innengewinde der Schraubenmutter ausgebildet.

Axiale Richtung bzw. Längsrichtung des Aufnahmeraums meint eine Ausdehnung des Aufnahmeraums von der vorderseitigen Öffnung zu der rückseitigen Öffnung. Das Distanzelement ist in radialer Richtung spielfrei in dem Aufnahmeraum geführt. Die radiale Richtung ist im Rahmen der Erfindung quer zur axialen Richtung orientiert.

Das Distanzelement weist im Rahmen der Erfindung eine erste Dichtfläche und eine zweite Dichtfläche auf, wobei die erste Dichtfläche komplementär zu dem Bördel des ersten Rohrendes und die zweite Dichtfläche komplementär zu dem Bördel des zweiten Rohrendes ausgebildet ist. Es empfiehlt sich, dass das Distanzelement insbesondere im vormontierten Zustand unverlierbar in dem Aufnahmeraum zwischen dem Gewindeabschnitt und der Anschlussfläche bzw. zwischen dem Gewindeabschnitt und dem Bördel des ersten Rohrendes gehalten wird.

Gemäß einer Ausführungsform erstreckt sich der Gewindeabschnitt lediglich über einen Teil der axialen Länge des Aufnahmeraums. Vorteilhafterweise schließt an den Gewindeabschnitt ein gewindefreier, vorzugsweise kreiszylinderförmiger Abschnitt an, welcher gewindefreie Abschnitt sich bis zur Anschlussfläche erstreckt. Eine axiale Länge des Gewindeabschnittes ist vorzugsweise größer als eine axiale Länge des gewindefreien Abschnitts. Die Relation der axialen Länge des Gewindeabschnitts zu der axialen Länge des gewindefreien Abschnitts beträgt vorteilhafterweise 1,2 bis 2,0, vorzugsweise 1,4 bis 1,8 und besonders bevorzugt 1,6 bzw. ungefähr 1,6. Das Distanzelement ist im vormontierten Zustand besonders bevorzugt in dem gewindefreien Abschnitt angeordnet.

Es empfiehlt sich, dass sich der Gewindeabschnitt weiter in den Aufnahmeraum erstreckt, als die Schraube zur Herstellung des montierten Zustands in die Schraubenmutter einschraubbar ist. Auf diese Weise wird sichergestellt, dass die Schraube mit dem in dem Aufnahmekanal der Schraube angeordneten gebördelten Rohrende beim Einschrauben in die Schraubenmutter zunächst kontaktfrei zu dem Distanzelement in die Schraubenmutter einschraubbar ist, wobei der Bördel des Rohrendes zunächst keinen Kontakt zu dem Distanzelement hat. Ein Einschrauben der Schraube ist also zunächst ohne einen durch ein Anliegen des Bördels des zweiten Rohrendes an dem Distanzelement hervorgerufenen Gegendruck möglich.

Es hat sich bewährt, dass das Distanzelement zumindest abschnittsweise vorzugsweise kreiszylinderförmig ausgebildet ist. Der Außendurchmesser des von einer äußeren Mantelfläche begrenzten Distanzelements ist vorteilhafterweise größer als der Innendurchmesser des Gewindeprofils des Innengewindes.

Es empfiehlt sich, dass zur Herstellung des vormontierten Zustands zunächst das erste Rohr der Art in dem Aufnahmeraum angeordnet wird, dass der erste Bördel besonders bevorzugt in dem gewindefreien Abschnitt angeordnet ist. Zweckmäßigerweise ist das Distanzelement in den gewindefreien Abschnitt des Aufnahmeraums der Schraubenmutter einbringbar, indem das Distanzelement zunächst in den Gewindeabschnitt der Schraubenmutter eingeschraubt wird, wobei eine Profilierung des Außengewindes des Distanzelements in die Profilierung des Innengewindes der Schraubenmutter greift. Das Distanzelement wird vorzugsweise durch den Gewindeabschnitt der Schraubenmutter geschraubt, so dass das Distanzelement in den gewindefreien Abschnitt des Aufnahmeraums eingebracht wird.

Gemäß einer bevorzugten Ausführungsform weist das Distanzelement eine radiale Stauchung auf, die in radialer Richtung über die äußere Mantelfläche des Distanzelementes übersteht. Der Außendurchmesser der radialen Stauchung ist vorteilhafterweise größer als der Innendurchmesser des Innengewindes des Gewindeabschnitts und/oder größer als der Außendurchmesser des Distanzelementes, der durch die Mantelfläche bestimmt ist. Vorzugsweise ist eine Außenseite der Stauchung, welche Außenseite der innenseitigen Oberfläche des Aufnahmeraums zugewandt ist, zylindermantelförmig ausgebildet.

Vorteilhafterweise steht die radiale Stauchung in Längsrichtung des Distanzelements mittig bzw. ungefähr mittig aus der Mantelfläche hervor. Längsrichtung des Distanzelements meint eine Ausdehnung des Distanzelements von der ersten Dichtfläche zur zweiten Dichtfläche, wobei die Längsrichtung des Distanzelements mit einer Längsachse des vorzugsweise kreiszylindrischen Aufnahmeraums fluchtet. Es hat sich als vorteilhaft herausgestellt, dass sich die radiale Stauchung über 30 bis 70 % der Länge des Distanzelementes, vorteilhafterweise über 40 bis 60 % der Länge des Distanzelementes und besonders bevorzugt über 50 % bzw. ungefähr 50 % der Länge des Distanzelementes erstreckt. Die Länge des Distanzelementes meint die Ausdehnung des Distanzelementes in Längsrichtung bzw. in axialer Richtung des Aufnahmeraums, wenn das Distanzelement in dem Aufnahmeraum aufgenommen ist.

Gemäß einer bevorzugten Ausführungsform verjüngt sich die radiale Stauchung ausgehend von einer mantelflächenseitigen Basis der Stauchung in Richtung der innenseitigen Oberfläche des Aufnahmeraums. Dadurch wird verhindert, dass sich das Distanzelement vor allem bei einem axialen Verschieben in dem Aufnahmeraum verkantet, wodurch eine fluiddichte Verbindung zwischen dem Distanzelement und dem ersten Bördel und/oder zweiten Bördel verhindert wird.

Besonders bevorzugt ist der erste Bördel des ersten Rohrendes als F-Bördel und/oder ist der zweite Bördel des zweiten Rohrendes als F-Bördel ausgebildet. Das Distanzelement weist vorteilhafterweise zwei Dichtflächen auf, wobei die eine Dichtfläche (zweite Dichtfläche) im montierten Zustand an dem zweiten Bördel und die weitere Dichtfläche (erste Dichtfläche) im montierten Zustand an dem ersten Bördel anliegt. Die erste Dichtfläche und/oder die zweite Dichtfläche sind jeweils komplementär zu dem der ersten Dichtfläche zugeordneten ersten Bördel und/oder dem der zweiten Dichtfläche zugeordneten zweiten Bördel ausgebildet. Grundsätzlich ist es möglich, dass ein Bördel als F-Bördel und ein Bördel als E-Bördel ausgebildet ist. Gemäß einer weiteren, möglichen Ausführungsform sind beide Bördel als E-Bördel ausgebildet.

Der Erfindung liegt die Erkenntnis zugrunde, dass sich eine erfindungsgemäße Schraubverbindungsvorrichtung durch eine einfache Montierbarkeit und hohe Funktionssicherheit auszeichnet. Wesentlich dabei ist, dass das Distanzelement auch im nicht montierten Zustand zuverlässig in dem Aufnahmeraum gehalten ist und ein versehentliches Verlieren des Distanzelementes, beispielsweise beim Transport, ausgeschlossen ist. Wesentlich darüber hinaus ist, dass die Sicherung des Distanzelementes in der Schraubenmutter auf überraschend einfache Weise gelingt, indem lediglich ein Gewindeabschnitt in dem Aufnahmeraum vorgesehen wird, der sich weiter in den Aufnahmeraum der Schraubenmutter erstreckt, als die Schraube im montieren Zustand der Schraubverbindungsvorrichtung in die Schraubenmutter eingebracht ist. Mit der erfindungsgemäßen Schraubverbindungsvorrichtung wird zudem sichergestellt, dass beim Einschrauben der Schraube in die Schraubenmutter ein Abklappen der Bördel verhindert wird. Dieses Abklappen stellt eine plastische Verformung der Bördel dar, wodurch eine zuverlässig fluiddichte Verbindung zwischen den beiden Rohrenden nicht mehr sichergestellt werden kann. Die erfindungsgemäße Vorrichtung zeichnet sich also durch beachtliche Vorteile aus.

Nachfolgend wird die Erfindung anhand einer lediglich ein Ausführungsbeispiel darstellenden Zeichnung detailliert erläutert. Es zeigen schematisch:
- **Fig. 1**: eine erfindungsgemäße Schraubverbindungsvorrichtung im vormontierten Zustand und
- **Fig. 2**: eine erfindungsgemäße Schraubverbindungsvorrichtung im montierten Zustand.

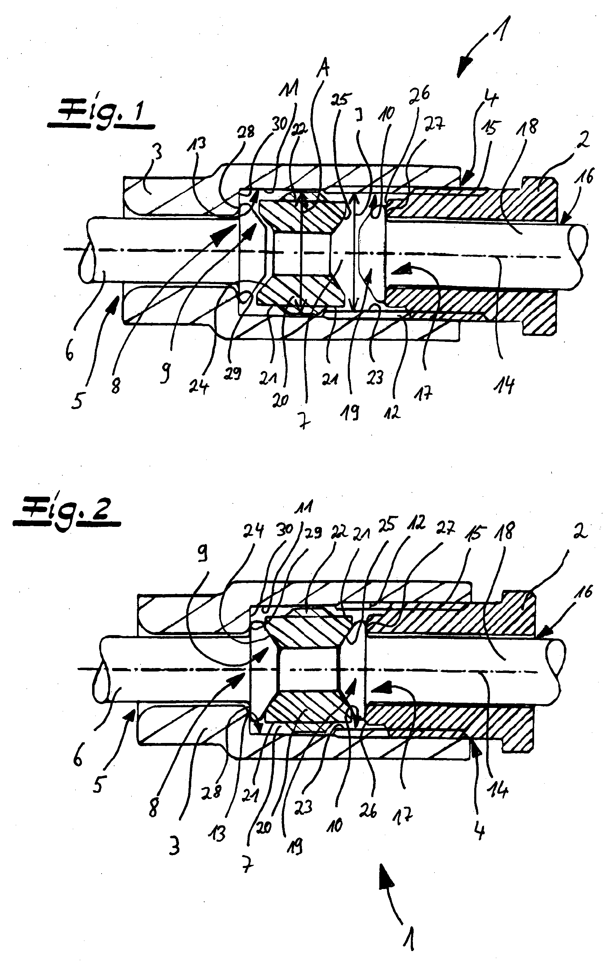

In Fig. 1 ist eine Schraubverbindungsvorrichtung 1 dargestellt, die eine Schraube 2 und eine Schraubenmutter 3 aufweist. Die Schraubenmutter 3 verfügt über eine vorderseitige Öffnung bzw. Einführöffnung 4 und eine rückseitige Öffnung 5. Durch die rückseitige Öffnung 5 ist ein erstes Rohr 6 in einen Aufnahmeraum 7 der Schraubenmutter 3 geführt. Ein erstes Rohrende 8 des ersten Rohres 6 ist gemäß dem Ausführungsbeispiel als F-Bördel 9 ausgebildet.

Von der Einführöffnung 4 aus erstreckt sich ein Gewindeabschnitt 10 in Richtung der rückseitigen Öffnung 5, wobei eine aufnahmeraumseitige, innere Oberfläche 11 der Schraubenmutter im Bereich des Gewindeabschnittes 10 mit einem Innengewinde 12 ausgestattet ist. An den Gewindeabschnitt 10 schließt in Richtung der rückseitigen Öffnung 5 ein gewindefreier Abschnitt 13 an, wobei das Verhältnis der axialen Länge des Gewindeabschnitts 10 zu der axialen Länge des gewindefreien Abschnitts 13 in dem Ausführungsbeispiel 1,6 beträgt. Länge meint eine Ausdehnung des Gewindeabschnitts 10 bzw. des gewindefreien Abschnitts 13 in Richtung einer Längsachse 14 des gemäß dem Ausführungsbeispiel zylinderförmig ausgebildeten Aufnahmeraum 7. Die Schraubenmutter 3 weist ein zu dem Innengewinde 12 komplementäres Außengewinde 15 auf, mit welchem Außengewinde 15 die Schraube 2 in die Schraubenmutter 3 einschraubbar ist. Die Schraubenmutter 3 weist gemäß dem Ausführungsbeispiel einen Aufnahmekanal 16 auf, durch den ein zweites Rohrende 17 eines zweiten Rohres 18 in den Aufnahmeraum 7 der Schraubenmutter 3 geführt ist. Das zweite Rohrende 17 des zweiten Rohres 18 ist gemäß dem Ausführungsbeispiel als F-Bördel ausgebildet.

Die Fig. 1 zeigt, dass in dem Aufnahmeraum 7 ein Distanzelement 20 angeordnet ist. Gemäß dem Ausführungsbeispiel weist das Distanzelement 20 eine zylindermantelförmige Mantelfläche 21 auf, auf der ein Außengewinde 22 angeordnet ist. Um das Distanzelement 20 in den gewindefreien Abschnitt 13 des Aufnahmeraums 7 einzubringen, wird das Distanzelement 20 zunächst in die Schraubenmutter 3 eingeschraubt, wobei das Außengewinde 22 mit dem Innengewinde 12 der Schraubenmutter 3 kämmt. Das Distanzelement 20 wird solange in den Aufnahmeraum 7 der Schraubenmutter 3 gedreht, bis das Außengewinde 22 des Distanzelements 20 nicht mehr mit dem Innengewinde 12 der Schraubenmutter 3 kämmt. Das Distanzelement 20 ist dann mit Spiel bzw. beweglich in dem gewindefreien Abschnitt 13 des Aufnahmeraums aufgenommen. Weiterhin ist in Fig. 1 dargestellt, dass eine Profilierung 23 des Innengewindes 12 derart ausgebildet ist, dass der Innendurchmesser I des Innengewindes 12 kleiner ist als der Außendurchmesser A einer Profilierung des Außengewindes 22 des Distanzelementes 20. Das in dem gewindefreien Abschnitt 13 des Aufnahmeraums 7 eingesetzte Distanzelement 20 ist bedingt durch die Einstellung des Durchmessers des Außengewindes 22 und des Innendurchmessers des Innengewindes 12 gegen ein Herausfallen aus dem Aufnahmeraum 7 gesichert. Das Distanzelement 20 verfügt darüber hinaus über eine Dichtfläche (erste Dichtfläche) 24, welche Dichtfläche 24 komplementär zu dem Bördel 9 des ersten Rohres 6 ausgebildet ist. Eine Dichtfläche (zweite Dichtfläche) 25 des Distanzelements 20 ist komplementär zu dem Bördel 19 des zweiten Rohres 18 geformt. In dem in Fig. 1 dargestellten, vormontierten Zustand ist das Distanzelement 20 verschiebbar in dem Aufnahmeraum 7 aufgrund der Ausbildung des Außengewindes 22 und des Innengewindes 12 gehalten. Eine fluiddichte Verbindung zwischen dem ersten Rohr 6 und dem zweiten Rohr 18 besteht in dem vormonierten Zustand gemäß Fig. 1 nicht.

In Fig. 2 ist der montierte Zustand der Schraubverbindungsvorrichtung 1 dargestellt. Der erste Bördel 9 liegt fluiddicht an der ersten Dichtfläche 24 des Distanzelementes 20 an. Die zweite Dichtfläche 25 des Distanzelementes liegt fluiddicht an dem zweiten Bördel 19 des zweiten Rohres 18 an. Die fluiddichte Anlage der Bördel 9, 19 an dem Distanzelement 20 wird erreicht, indem die Schraube 2 in die Schraubenmutter 3 eingeschraubt wird. Eine stirnseitige Pressfläche 26 der Schraube 2 beaufschlagt eine rückseitige Anlagefläche des Bördels 19 mit einer Anpresskraft, wodurch der Bördel 19 gegen das Distanzelement 20 und das Distanzelement 20 gegen den Bördel 9 gepresst wird. Der Bördel 9 liegt gemäß Fig. 2 mit einer rückseitigen Anlagefläche 28 an einer aufnahmeraumseitigen Anschlussfläche 29 der Schraubenmutter 3 an. In der Anschlussfläche 29 ist im Übrigen die rückseitige Öffnung 5 der Schraubenmutter 3 angeordnet, durch welche in einer rückseitigen Stirnwand 30 der Schraubenmutter 3 angeordnete rückseitige Öffnung 5 das erste Rohr 6 in den Aufnahmeraum 7 geführt ist.

Fernerhin ist in Fig. 2 gezeigt, dass sich das Innengewinde 12 des Gewindeabschnitts 10 ausgehend von der Einführöffnung 4 weiter entlang der Längsachse 14 in den Aufnahmeraum 7 erstreckt, als die Schraube 2 in die Schraubenmutter 3 im montierten Zustand einschraubbar ist. In dem Ausführungsbeispiel beträgt das Verhältnis der Länge des Gewindeabschnitts 10 zu der Länge des gewindefreien Abschnitts 13 in Richtung der Längsachse 14 1,6.

## Patentansprüche

1. Schraubverbindungsvorrichtung zur Verbindung gebördelter Rohrenden (8, 17) zweier Rohre (6, 18) umfassend zwei Rohre (6, 18) mit gebördelten Rohrenden (8, 17), eine Schraube (2), eine Schraubenmutter (3) und ein Distanzelement (20), wobei die Schraubenmutter (3) eine vorderseitige Öffnung (4) aufweist, von welcher vorderseitigen Öffnung (4) sich ein vorzugsweise zylindrischer Aufnahmeraum (7) in Richtung einer rückseitigen Öffnung (5) der Schraubenmutter (3) erstreckt, wobei eine aufnahmeraumseitige Oberfläche (11) der Schraubenmutter (3) einen Gewindeabschnitt (10) aufweist, welcher Gewindeabschnitt (10) als Innengewinde (12) ausgebildet und sich ausgehend von der vorderseitigen Öffnung (4) in Richtung der rückseitigen Öffnung (5) abschnittsweise in dem Aufnahmeraum erstreckt, wobei die rückseitige Öffnung (5) in einer rückseitigen Stirnwand (30) der Schraubenmutter (3) angeordnet ist, welche rückseitige Stirnwand (30) eine aufnahmeraumseitige Anschlussfläche (29) aufweist, wobei in der Schraubenmutter (3) in einem vormontierten Zustand das Distanzelement (20) und ein erstes Rohrende (6) mit einem ersten Bördel (9) aufnehmbar ist, wobei sich ein Gewindeprofil des Innengewindes (12) mit der Maßgabe in den Aufnahmeraum (7) erstreckt, dass in dem vormontierten Zustand das Distanzelement (20) zwischen dem ersten Bördel (9) und dem Innengewinde (12) unverlierbar und mit einem vorgegebenen Spiel in dem Aufnahmeraum (7) gehalten wird, wobei in der Schraube (2) ein zweites Rohrende (18) mit einem zweiten Bördel (19) haltbar ist, wobei durch Einschrauben der Schraube (2) in die Schraubenmutter (3) ein montierter Zustand herstellbar ist, wobei der zweite Bördel (19) im montierten Zustand derart mit einer Antriebskraft durch die Schraube (2) beaufschlagbar ist, dass der zweite Bördel (19) gegen eine Dichtfläche (zweite Dichtfläche) (25) des Distanzelementes (20) und das Distanzelement (20) mit einer weiteren Dichtfläche (ersten Dichtfläche) (24) gegen den ersten Bördel (9) derart gepresst wird, dass eine rückseitige Anlagefläche (28) des ersten Bördels (9) im montierten Zustand gegen die Anschlussfläche (29) der Schraubenmutter (3) gepresst wird, wobei das Distanzelement (20) ein Außengewinde (22) aufweist, das komplementär zu dem Innengewinde (12) der Schraubenmutter (3) ausgebildet ist, **dadurch gekennzeichnet, dass** das Distanzelement (20) mit der Maßgabe in dem Aufnahmeraum (7) gehalten ist, dass das Distanzelement (20) lediglich in axialer Richtung bzw. Längsrichtung (14) des Aufnahmeraums (7) beweglich ist.

2. Schraubverbindungsvorrichtung nach Anspruch 1, wobei sich der Gewindeabschnitt (10) lediglich über einen Teil der axialen Länge des Aufnahmeraums (7) erstreckt.

3. Schraubverbindungsvorrichtung nach einem der Ansprüche 1 oder 2, wobei an den Gewindeabschnitt (10) ein gewindefreier, vorzugsweise kreiszylinderförmiger Abschnitt (13) anschließt, welcher gewindefreier Abschnitt (13) sich bis zur Anschlussfläche (29) erstreckt.

4. Schraubverbindungsvorrichtung nach einem der Ansprüche 1 bis 3, wobei sich der Gewindeabschnitt (10) weiter in den Aufnahmeraum (7) erstreckt, als die Schraube (2) zur Herstellung des montierten Zustands in die Schraubenmutter (3) einschraubbar ist.

5. Schraubverbindungsvorrichtung nach einem der Ansprüche 1 bis 4, wobei das Distanzelement (20) zumindest abschnittsweise vorzugsweise kreiszylinderförmig ausgebildet ist.

6. Schraubverbindungsvorrichtung nach einem der Ansprüche 1 bis 5, wobei das Distanzelement (20) eine radiale Stauchung aufweist, die in radialer Richtung über eine äußere Mantelfläche (21) des Distanzelementes (20) übersteht.

7. Schraubverbindungsvorrichtung nach Anspruch 6, wobei die radiale Stauchung in Längsrichtung des Distanzelements (20) mittig bzw. ungefähr mittig aus der Mantelfläche (21) hervorsteht.

8. Schraubverbindungsvorrichtung nach einem der Ansprüche 6 oder 7, wobei sich die radiale Stauchung ausgehend von einer mantelflächenseitigen Basis der Stauchung in Richtung der innenseitigen Oberfläche (11) des Aufnahmeraums (7) verjüngt.

9. Schraubverbindungsvorrichtung nach einem der Ansprüche 1 bis 8, wobei der erste Bördel (9) des ersten Rohrendes (8) als F-Bördel und/oder der zweite Bördel (19) des zweiten Rohrendes (18) als F-Bördel ausgebildet ist.

## Claims

1. A screw joint arrangement for connecting flared pipe ends (8, 17) of two pipes (6, 18), comprising two pipes (6, 18) with flared pipe ends (8, 17), a screw (2), a screw nut (3) and a spacer element (20), wherein the screw nut (3) features a front opening (4) and a preferably cylindrical receptacle space (7) extends from said front opening (4) in the direction of a rear opening (5) of the screw nut (3), wherein a surface (11) of the screw nut (3) on the side of the receptacle space features a thread section (10), wherein said thread section (10) is realized in the form of an internal thread (12) and, starting from the front opening (4), sectionally extends into the receptacle space in the direction of the rear opening (5), wherein the rear opening (5) is arranged in a rear end wall (30) of the screw nut (3) and said rear end wall (30) features a connection face (29) on the side of the receptacle space, wherein the spacer element (20) and a first pipe end (6) with a first flare (9) can be accommodated in the screw nut (3) in a preassembled state, wherein a thread profile of the internal thread (12) extends into the receptacle space (7) in such a way that the spacer element (20) is in the preassembled state captively held in the receptacle space (7) between the first flare (9) and the internal thread (12) with predefined play, wherein a second pipe end (18) with a second flare (19) can be held in the screw (2), wherein an assembled state can be procuced by screwing the screw (2) into the screw nut (3), wherein the screw (2) can in the assembled state act upon the second flare (19) with a motive force in such a way that the second flare (19) is pressed against a sealing face (second sealing face) (25) of the spacer element (20) and the spacer element (20) is pressed against the first flare (9) with an additional sealing face (first sealing face) (24) such that a rear contact face (28) of the first flare (9) is in the assembled state pressed against the connection face (29) of the screw nut (3), and wherein the spacer element (20) features an external thread (22) that is realized complementary to the internal thread (12) of the screw nut (3), **characterized in that** the spacer element (20) is held in the receptacle space (7) in such a way that the spacer element (20) is only movable in the axial direction or the longitudinal direction (14) of the receptacle space (7), respectively.

2. The screw joint arrangement according to claim 1, wherein the thread section (10) merely extends over part of the axial length of the receptacle space (7).

3. The screw joint arrangement according to one of claims 1 or 2, wherein a threadless section (13), which preferably has the shape of a circular cylinder, follows the thread section (10) and said threadless section (13) extends up to the connection face (29).

4. The screw joint arrangement according to one of claims 1-3, wherein the thread section (10) extends into the receptacle space (7) farther than the screw (2) can be screwed into the screw nut (3) in order to produce the assembled state.

5. The screw joint arrangement according to one of claims 1-4, wherein the spacer element (20) preferably is at least sectionally realized with the shape of a circular cylinder.

6. The screw joint arrangement according to one of claims 1-5, wherein the spacer element (20) features a radial bulge that protrudes over an outer surface area (21) of the spacer element (20) in the radial direction.

7. The screw joint arrangement according to claim 6, wherein the radial bulge respectively protrudes from the surface area (21) centrally or about centrally referred to the longitudinal direction of the spacer element (20).

8. The screw joint arrangement according to one of claims 6 or 7, wherein the radial bulge is tapered in the direction of the inner surface (11) of the receptacle space (7) starting from a base of the bulge on the side of the surface area.

9. The screw joint arrangement according to one of claims 1-8, wherein the first flare (9) of the first pipe end (8) is realized in the form of an F-flare and/or the second flare (19) of the second pipe end (18) is realized in the form of an F-flare.

## Revendications

1. Dispositif de liaison par vissage pour relier des extrémités de tuyau crénelées (8, 17) de deux tuyaux (6, 18) comprenant deux tuyaux (6, 18) avec des extrémités de tuyaux crénelées (8, 17), une vis (2), un écrou (3) et un élément d'écarteur (20), dans lequel l'écrou (3) présente une ouverture du côté avant (4), à partir de laquelle ouverture du côté avant (4) un espace de réceptacle de préférence cylindrique (7) s'étend dans la direction d'une ouverture du côté arrière (5) de l'écrou (3), dans lequel une surface du côté d'espace de réceptacle (11) de l'écrou (3) présente une portion de filetage (10), laquelle portion de filetage (10) est conçue comme un filetage intérieur (12) et s'étend à partir de l'ouverture du côté avant (4) dans la direction de l'ouverture du côté arrière (5) par portions à l'intérieur de l'espace de réceptacle, dans lequel l'ouverture du côté arrière (5)est disposée dans une paroi frontale du côté arrière (30) de l'écrou (3), laquelle paroi frontale du côté arrière (30) présente une surface de raccordement du côté d'espace de réceptacle (29), dans lequel dans l'écrou (3) dans un état prémonté l'élément d'écarteur (20) et une première extrémité de tuyau (6) peuvent être insérés dans un premier raccorde bordage crénelé (9), dans lequel un profil de filetage du filetage intérieur (12) s'étend à l'intérieur de l'espace de réceptacle (7) dans une proportion telle que dans l'état prémonté l'élément d'écarteur (20) entre le premier raccord de bordage crénelé (9) et le filetage intérieur (12) est maintenu de manière imperdable et avec un jeu prescrit dans l'espace de réceptacle (7), dans lequel dans la vis (2) une deuxième extrémité de tuyau (18) peut être maintenue avec un deuxième rapport de bordage crénelé (19), dans lequel en vissant la vis (2) dans l'écrou (3) un état monté peut être produit, dans lequel le deuxième raccord de bordage crénelé (19) en l'état monté peut être sollicité avec une force d'entraînement par la vis (2) de telle sorte que le deuxième raccord de bordage crénelé (19) soit pressé contre une surface d'étanchéité (deuxième surface d'étanchéité) (25) de l'élément d'écarteur (20) et l'élément d'écarteur (20) soit pressé par une autre surface d'étanchéité (première surface d'étanchéité) (24) contre le premier raccord de bordage crénelé (9) de telle sorte que une surface de positionnement du côté arrière (28) du premier raccord de bordage crénelé (9) en l'état monté soit pressé contre la surface de raccordement (29) de l'écrou (3), dans lequel l'élément d'écarteur (20) présente un filetage extérieur (22), qui est conçu de manière complémentaire au filetage intérieur (12) de l'écrou (3), **caractérisé en ce que** l'élément d'écarteur (20) est maintenu dans l'espace de réceptacle (7) dans une proportion telle que l'élément d'écarteur (20) soit mobile uniquement dans la direction axiale, respectivement direction longitudinale (14) de l'espace de réceptacle (7).

2. Dispositif de liaison par vissage selon la revendication 1, dans lequel la portion de filetage (10) s'étend uniquement sur une partie de la longueur axiale de l'espace de réceptacle (7).

3. Dispositif de liaison par vissage selon une des revendications 1 ou 2, dans lequel à la portion de filetage (10) se rattache une portion sans filetage, de préférence de forme cylindrique (13), laquelle portion sans filetage (13) s'étend jusqu'à la surface de raccordement (29).

4. Dispositif de liaison par vissage selon une des revendications 1 à 3, dans lequel la portion de filetage (10) s'étend davantage dans l'espace de réceptacle (7) que la vis (2) peut être vissé dans l'écrou (3) afin de produire l'état monté.

5. Dispositif de liaison par vissage selon une des revendications 1 à 4, dans lequel l'élément d'arteur (20) est conçu au moins par portions de préférence en forme cylindrique.

6. Dispositif de liaison par vissage selon une des revendications 1 à 5, dans lequel l'élément d'écarteur (20) présente un écrasement radial, qui dépasse en saillie dans la direction radiale par-dessus une surface de gaine extérieure (21) de l'élément d'écarteur (20).

7. Dispositif de liaison par vissage selon la revendication 6, dans lequel l'écrasement radial saille dans la direction longitudinale de l'élément d'écarteur (20) au centre, respectivement approximativement au centre à partir de la surface de gaine (21).

8. Dispositif de liaison par vissage selon une des revendications 6 ou 7, dans lequel l'écrasement radial s'amincit à partir d'une base du côté de surface de gaine de l'écrasement dans la direction de la surface du côté intérieur (11) de l'espace de réceptacle (7).

9. Dispositif de liaison par vissage selon une des revendications 1 à 8, dans lequel le premier rapport de bordage crénelé (9) de la première extrémité de tuyau (8) est conçu comme un raccord de bordage crénelé F et/ou le deuxième raccord de bordage crénelé (19) de la deuxième extrémité de tuyau (18) est conçu comme un raccord de bordage crénelé F.
